Europäisches Patentamt

European Patent Office

Office européen des brevets

(19)

(11) Numéro de publication: **0 158 309**
**B1**

(12) # FASCICULE DE BREVET EUROPEEN

(45) Date de publication du fascicule du brevet:
**15.07.87**

(51) Int. Cl.⁴: **B 65 G 53/46, C 21 B 5/00**

(21) Numéro de dépôt: **85104208.5**

(22) Date de dépôt: **06.04.85**

(54) **Dispositif d'introduction de quantités dosées de matières pulvérulentes dans un fluide de propulsion pneumatique.**

(30) Priorité: **11.04.84 LU 85299**

(43) Date de publication de la demande:
**16.10.85 Bulletin 85/42**

(45) Mention de la délivrance du brevet:
**15.07.87 Bulletin 87/29**

(84) Etats contractants désignés:
**AT BE DE FR GB IT NL SE**

(56) Documents cités:
**EP - A - 0 108 319**
**DE - A - 2 552 594**
**GB - A - 20 698**
**GB - A - 1 094 112**
**GB - A - 2 086 553**

(73) Titulaire: **PAUL WURTH S.A., 32 rue d'Alsace,
L-1122 Luxembourg (LU)**

(72) Inventeur: **Legille, Edouard, 165 rue de Trèves,
Luxembourg (LU)**
Inventeur: **Ulveling, Léon, 30 rue Dr. Jos Peffer, Howald
(LU)**
Inventeur: **Mailliet, Pierre, 1 allée Drosbach, Howald (LU)**

(74) Mandataire: **Meyers, Ernest et al, Office de Brevets
Freylinger & Associés 46 rue du Cimetière B.P. 1153,
L-1011 Luxembourg (LU)**

## Description

La présente invention concerne un dispositif d'introduction de quantités dosées de matières pulvérulentes dans un fluide de propulsion pneumatique, comprenant un boîtier sensiblement cylindrique connecté à une source de fluide sous pression et pourvu d'une première ouverture latérale en communication avec un réservoir de matières pulvérulentes, dans lequel règne une pression supérieure à celle du fluide de propulsion, ce boîtier renfermant deux douilles coaxiales dont l'une, au moins, est mobile autour de son axe longitudinal et est reliée, à cet effet, à un dispositif d'entraînement approprié, chacune des douilles étant pourvue d'une fente au niveau de l'ouverture latérale du boîtier de façon que ces fentes puissent plus ou moins chevaucher ou se masquer mutuellement par rotation de la douille mobile et définir ainsi un passage plus ou moins grand entre le réservoir de matières pulvérulentes et l'intérieur du boîtier.

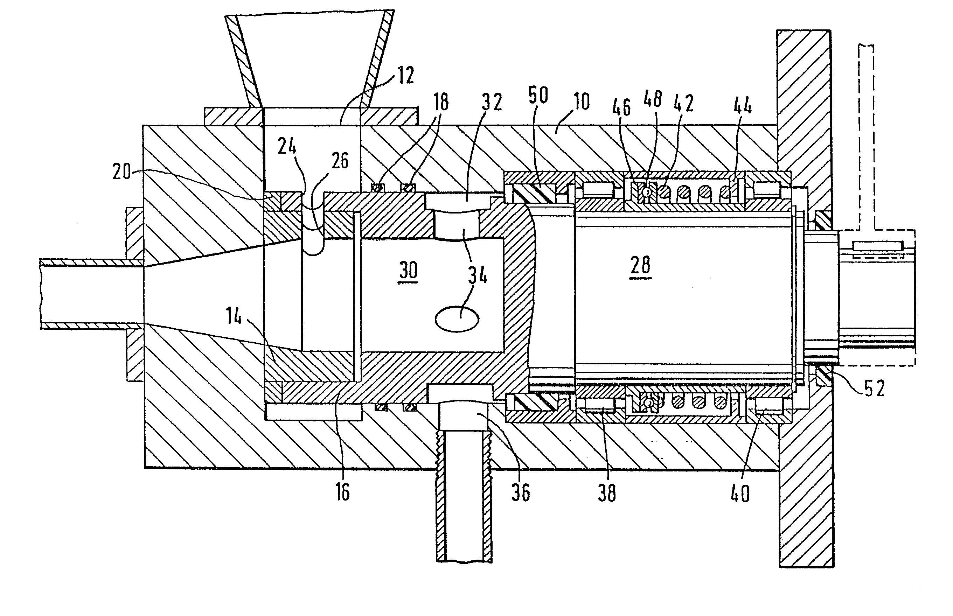

Un dispositif de ce genre est proposé dans la demande de brevet européen EP-A-108319 qui est considérée comme comprise dans l'état de la technique selon l'article SU(3) CBE. En vue de la rotation de la douille mobile, celle-ci est, selon le mode de réalisation montré par les figures 8 et 9 de la demande de brevet précitée, solidaire d'un rotor pourvu d'une extension cylindrique axiale qui est engagée dans un alésage axial correspondant d'un arbre rotatif d'entraînement. Cet arbre est logé moyennant des roulements à billes à l'intérieur du boîtier et est fixe dans le sens axial. Le rotor est rendu solidaire en rotation de cet arbre, par exemple au moyen d'une clavette, mais est libre dans le sens axial et subit l'action d'un ressort dans la direction opposée à l'arbre.

Ce montage présente l'inconvénient que le rotor avec la douille mobile est maintenu en porte à faux par l'extrémité de l'arbre qui est lui-même tenu en porte à faux par les deux roulements à billes relativement rapprochés. Etant donné, d'autre part, qu'un certain jeu doit subsister entre le rotor et le boîtier pour éviter le grippage et que la douille mobile subit l'action de la pression dans le réservoir de matières pulvérulentes, cette pression exerce un moment sur le rotor et il se produit un frottement métal sur métal entre le rotor et le boîtier du côté opposé à celui de l'admission de la matière pulvérulente. En outre, ce moment a tendance à augmenter tôt ou tard le jeu entre le rotor et l'arbre d'entraînement.

Le clavetage entre le rotor et l'arbre est également sujet à des agrandissements de jeu dans le sens rotatif, ce qui entraîne une diminution progressive de la précision de dosage.

Le but de la présente invention est de prévoir un nouveau dispositif du genre décrit dans le préambule, qui ne présente pas ces inconvénients.

Pour atteindre cet objectif, le dispositif selon l'invention est essentiellement caractérisé en ce que la douille mobile fait directement partie d'un arbre d'entraînement qui est logé par l'intermédiaire de deux roulements coaxialement dans le boîtier, qui est libre axialement et angulairement et qui subit l'action d'un ressort de compression prenant appui, d'un côté, sur une bride circulaire intérieure du boîtier et, du côté opposé, sur une bride circulaire extérieure de l'arbre d'entraînement.

Pour assurer la liberté axiale de l'arbre, les roulements sont des roulements à rouleaux ou à aiguilles.

Le ressort de compression est prévu entre les deux roulements, ce qui permet d'écarter ceux-ci davantage l'un de l'autre et d'assurer ainsi un meilleur support de l'arbre d'entraînement et de réduire la longueur du porte-à-faux de la partie antérieure formant la douille rotative.

D'autres particularités et caractéristiques ressortiront de la description détaillée d'un mode de réalisation avantageux, présenté ci-dessous, à titre d'illustration, en référence à la figure annexée unique qui montre schématiquement une coupe longitudinale à travers un doseur selon la présente invention.

Le doseur de la figure comporte un boîtier 10, de forme carrée ou cylindrique, pourvu d'une ouverture latérale 12 raccordée à un réservoir sous pression contenant des matières pulvérulentes. A l'intérieur du boîtier se trouvent une douille fixe 14 solidaire du boîtier 10 et une douille rotative 16. Un ou plusieurs joints 18 assurent l'étanchéité entre cette douille mobile 16 et le boîtier 10. La partie frontale de la douille mobile 16 frotte contre une bague de frottement 20 comme dans la demande de brevet précitée EP-A-108319. Les deux douilles 14 et 16 sont également pourvues de fentes de dosage 24, 26 dont le fonctionnement est expliqué dans la demande de brevet précitée et ne sera plus décrit en détail dans le contexte de la présente invention.

La douille mobile 24, contrairement au montage proposé par les demandes de brevet précitées, est montée directement sur ou fait partie d'un arbre d'entraînement rotatif 28 dont la partie antérieure comporte un alésage axial 30 pour l'admission de l'air sous pression. Cet alésage 30 est entouré d'une chambre d'admission annulaire 32 qui communique à travers une série d'ouvertures 34 avec l'intérieur de l'alésage 30 et avec une ouverture latérale 36 branchée sur une conduite d'admission d'air sous pression.

L'arbre 28 est logé coaxialement dans le boîtier 10 par l'intermédiaire d'une paire de roulements 38, 40, de façon à pouvoir tourner autour de son axe longitudinal. Entre ces deux roulements 38, 40 se trouve un ressort de compression 42 prenant appui, d'une part, sur une bride circulaire intérieure 44 du boîtier 10 et, d'autre part, sur une bride circulaire extérieure 46 de l'arbre 28. Pour permettre la rotation de l'arbre 28 par rapport au ressort 42, un roulement à billes 48 est inséré entre la bride 46 et ce ressort 42. L'action de ce ressort 42 tend à pousser l'arbre 28 vers la gauche sur la figure, c'est-à-dire à maintenir la douille 16 en appui sur la bague 20 et à compenser une usure éventuelle de celle-ci. Pour que l'action du ressort 42 ait de l'effet, il faut bien entendu que l'arbre 28 soit libre dans le sens axial. C'est la raison pour laquelle les

2

éléments des roulements 38, 40 sont des rouleaux ou des aiguilles. En outre, les rouleaux ou les aiguilles assurent un meilleur maintien de l'arbre 28, étant donné que la ligne de contact avec l'arbre 28 est plus grande que dans le cas d'un roulement à billes.

L'étanchéité contre l'air sous pression est assurée par un joint circulaire 50, tandis que la fermeture et l'étanchéité vers l'extérieur sont assurées par une bague ou un joint 52.

A l'extérieur du boîtier 10, l'arbre 28 est actionné par un mécanisme approprié pour le faire tourner autour de son axe longitudinal afin de réduire ou d'agrandir l'ouverture d'un passage au niveau des fentes 24, 26.

Le fait que la douille rotative fait directement partie de l'arbre, en combinaison avec la réduction du porte-à-faux par suite de l'écartement des roulements, permet une diminution du jeu au niveau des joints 18 qui, il est rappelé, ne peut pas être lubrifié.

## Revendications

1. Dispositif d'introduction de quantités dosées de matières pulvérulentes dans un fluide de propulsion pneumatique comprenant un boîtier (10) sensiblement cylindrique et connecté à une source de fluide sous pression et pourvu d'une première ouverture latérale (12) en communication avec un réservoir de matières pulvérulentes, dans lequel règne une pression supérieure à celle du fluide de propulsion, ce boîtier renfermant deux douilles coaxiales (14, 16) dont l'une, au moins, est mobile autour de son axe longitudinal et est reliée, à cet effet, à un dispositif d'entraînement approprié, chacune des douilles (14, 16) étant pourvue d'une fente (24, 26) au niveau de l'ouverture latérale (12) du boîtier (10) de façon que ces fentes (24, 26) puissent plus ou moins chevaucher ou se masquer mutuellement par rotation de la douille mobile (16) et définir ainsi un passage plus ou moins grand entre le réservoir de matières pulvérulentes et l'intérieur du boîtier (10), la douille mobile (16) faisant directement l'intermédiaire de deux roulements (38, 40) coaxialement dans le boîtier (10), qui est libre axialement et angulairement et qui subit l'action d'un ressort de compression (42) prenant appui, d'un côté, sur une bride circulaire intérieure (44) du boîtier (10) et, du côté opposé, sur une bride circulaire extérieure (46) de l'arbre d'entraînement (28).

2. Dispositif selon la revendication 1, caractérisé en ce que les roulements (44, 46) sont des roulements à rouleaux ou à aiguilles.

3. Dispositif selon l'une des revendications 1 ou 2, caractérisé en ce que le ressort de compression (42) est prévu entre les deux roulements (38, 40).

4. Dispositif selon l'une des revendications 1 à 3, caractérisé par un roulement à billes (48) prévu entre le ressort (42) et la bride (46) de l'arbre d'entraînement (28).

## Patentansprüche

1. Vorrichtung zum Einspeisen dosierter Mengen pulverförmiger Stoffe in ein pneumatisches Transportfluid, umfassend ein im wesentlichen zylindrisches Gehäuse (10), welches an eine Druckfluidquelle angeschlossen und mit einer ersten seitlichen Öffnung (12) versehen ist, die ihrerseits mit einem Vorratsbehälter für pulverförmige Stoffe, in welchem ein höherer Druck herrscht als derjenige des Transportfluids, angeschlossen ist, wobei dieses Gehäuse innen zwei koaxiale Hülsen (14, 16) aufweist von denen mindestens eine um ihre Längsachse drehbar und zu diesem Zweck mit einer geeigneten Betätigungsvorrichtung verbunden ist, jede dieser Hülsen (14, 16) mit einem Spalt (24, 26) im Bereich der seitlichen Öffnung (12) des Gehäuses (10) so versehen ist, dass diese Spalte (24, 26) sich durch Drehen der drehbaren Hülse (16) in mehr oder weniger grossem Masse gegenseitig überlappen, bzw. verdecken und so einen mehr oder weniger grossen Durchlass zwischen dem Vorratsbehälter für pulverförmige Stoffe und dem Innern des Gehäuses (10) definieren, und die drehbare Hülse (16) unmittelbar teil einer Betätigungswelle (28) ist, welche mittels zweier Wälzlager (38, 40) koaxial im Gehäuse (10) gelagert und axial und winkelmässig frei ist und unter der Wirkung einer Druckfeder (42) steht, welche sich einerseits an einem kreisförmigen Innenflansch (44) des Gehäuses (10) abstützt und andererseits an einem kreisförmigen Aussenflansch (46) der Betätigungswelle (28).

2. Vorrichtung nach Anspruch 1, dadurch gekennzeichnet, dass die Wälzlager (44, 46) Rollenoder Nadellager sind.

3. Vorrichtung nach einem der Ansprüche 1 oder 2, dadurch gekennzeichnet, dass die Druckfeder (42) zwischen den beiden Wälzlagern (38, 40) vorgesehen ist.

4. Vorrichtung nach einem beliebigen der Ansprüche 1 bis 3, gekennzeichnet durch ein zwischen der Feder (42) und dem Flansch (46) der Betätigungswelle (28) vorgesehenes Kugellager (48).

## Claims

1. Apparatus for introducing dosed quantities of pulverulent materials into a pneumatic propulsion fluid, comprising a substantially cylindrical box (10) connected to a source of fluid under pressure and provided with a first lateral orifice (12) in communication with a reservoir for pulverulent materials, in which a pressure prevails which is above that of the propulsion fluid, the said box containing two coaxial sockets (14, 16) of which at least one is movable about its longitudinal axis and is connected for this purpose to a suitable driving device, the sockets (14, 16) having slits (24, 26) facing the lateral orifice (12) of the box (10) in such a way that by rotating the movable socket (16) these slits (24, 26) can be made to overlap to a greater or smaller extent or mask each other, thus defining a wider or narrower passage between the reservoir for the pulverulent materials and the interior of the box (10), wherein the movable socket (16) forms an actual part of a driving shaft (28) which is mounted coaxially in the box (10) by means of two bearings (38, 30), and which has freedom of movement in the axial and angular directions and which is subject to the action of a compression spring (42) resting at the one end on an internal circular flange (44) of the box (10) and at the opposite end on an external circular flange (46) of the driving shaft (28).

2. Device in accordance with Claim 1, characterized by the fact that the bearings (44, 46) consist of a roller or needle bearings.

3. Device in accordance with Claim 1 or 2, characterized by the fact that the compression spring (42) is provided between the two bearings (38, 40).

4. Device in accordance with any one of Claims 1-3, characterized by a ball bearing (48) provided between the spring (42) and the flange (46) of the driving shaft (28).